# EUROPEAN PATENT APPLICATION

(11) **EP 4 149 056 A1**
(43) Date of publication of application: **15.03.2023**
(21) Application number: 22177781.6
(22) Date of filing: 08.06.2022
(51) Int. Cl.: H04L 12/18

(54) **INFORMATION PROCESSING PROGRAM, INFORMATION PROCESSING METHOD, AND INFORMATION PROCESSING APPARATUS**

(30) Priority: 14.09.2021 JP 2021149389
(71) Applicant: FUJITSU LIMITED, Kawasaki-shi, Kanagawa 211-8588 (JP)
(72) Inventor: Kambara, Yusuke, Kawasaki-shi, Kanagawa, 211-8588 (JP); Fujishima, Yuki, Kawasaki-shi, Kanagawa, 211-8588 (JP); Machida, Takanori, Kawasaki-shi, Kanagawa, 211-8588 (JP); Torii, Satoru, Kawasaki-shi, Kanagawa, 211-8588 (JP)
(74) Representative: Hoffmann Eitle

(57) **Abstract**

An information processing program including instructions which, when executed by a computer, cause the computer to execute processing, the processing including: transmitting, to a participant, access destination location information for participation in an online conference that includes a parameter of a value associated with an attribute of the participant of the online conference; allowing the participant to participate in the online conference in response to an access in which the access destination location information is specified from a terminal used by the participant; and determining whether or not to transmit information that indicates a content to the terminal on a basis of the attribute of the participant that corresponds to the value of the parameter included in the access destination location information used for the access at a time of participation in the online conference and a confidentiality level of the content to be shared in the online conference.

## Description

### FIELD

The embodiments discussed herein are related to an information processing program, an information processing method, and an information processing apparatus.

### BACKGROUND

With the promotion of telework, online conferences held via computer networks have become common. Online conferencing reduces geographical restrictions among conference participants, and facilitates conferences with various related people inside and outside a company. Furthermore, since there is no spatial restriction for conferences in the online conferences, there is virtually no limit on the number of people, and conferences with a large number of people are held without difficulty.

Meanwhile, in the online conferences, the risk of information leaks increases when conference materials are shared without consideration. In view of the above, a technique for suppressing information leaks has been considered. For example, there has been proposed a system in which a user who shares a screen with another device is enabled to protect a part of the screen from being shared by designating the part of the screen as a part to be protected from sharing. Furthermore, there has also been proposed an information processing apparatus capable of flexibly determining information to be shared by participants of a web conference at the conference. As a technique for controlling a transmission destination of information, there has also been proposed an information processing apparatus capable of transferring a document to a user who needs the document.

Japanese National Publication of International Patent Application No. 2020-504353, Japanese Laid-open Patent Publication No. 2019-036155, and Japanese Laid-open Patent Publication No. 2013-232048 are disclosed as related art.

### SUMMARY

### TECHNICAL PROBLEM

In may online conference systems, a participant can easily participate in a desired online conference by accessing, from a terminal, a uniform resource locator (URL) distributed in advance. With such a method of participation, the participant can, as long as he or she knows the URL for participating in the conference, participate in the conference from anywhere using a terminal convenient at the time, such as a personal computer, a tablet, a smartphone, or the like, which is highly user-friendly.

However, in the past, there has been no system for properly managing approval and disapproval of information sharing for each participant in a case where it is intended to allow only some of the participants participated in the conference by accessing the specified URL to share information and is not intended to allow the other participants to share the information. Accordingly, there is a risk that confidential information is erroneously shared so that the confidential information is disclosed to a participant not to be allowed to view the confidential information, resulting in a leak of the confidential information.

In one aspect, the embodiments aim to suppress leaks of confidential information.

### SOLUTION TO PROBLEM

According to an aspect of the embodiments, there is provided an information processing program comprising instructions which, when executed by a computer, cause the computer to execute processing. In an example, the processing includes: transmitting, to a participant, access destination location information for participation in an online conference that includes a parameter of a value associated with an attribute of the participant of the online conference; allowing the participant to participate in the online conference in response to an access in which the access destination location information is specified from a terminal used by the participant; and determining whether or not to transmit information that indicates a content to the terminal on a basis of the attribute of the participant that corresponds to the value of the parameter included in the access destination location information used for the access at a time of participation in the online conference and a confidentiality level of the content to be shared in the online conference.

### ADVANTAGEOUS EFFECTS OF INVENTION

According to one aspect, it becomes possible to suppress the leaks of confidential information.

### BRIEF DESCRIPTION OF DRAWINGS

FIG. 1 is a diagram illustrating an exemplary information processing method according to a first embodiment;
FIG. 2 is a diagram illustrating an exemplary system configuration according to a second embodiment;
FIG. 3 is a diagram illustrating exemplary hardware of a server;
FIG. 4 is a block diagram illustrating exemplary functions of individual devices;
FIG. 5 is a diagram illustrating exemplary conference history information;
FIG. 6 is a diagram illustrating exemplary participant attribute information;
FIG. 7 is a diagram illustrating exemplary job classification information;
FIG. 8 is a diagram illustrating an exemplary disclosure range management table;
FIG. 9 is a diagram illustrating exemplary generation and distribution of a conference URL;
FIG. 10 is a flowchart illustrating an exemplary procedure of a conference URL distribution process;
FIG. 11 is a flowchart illustrating an exemplary procedure of an automated attribute determination process;
FIG. 12 is a diagram illustrating exemplary automated attribute determination of participants based on the conference history information;
FIG. 13 is a diagram illustrating exemplary automated attribute determination based on the job classification information;
FIG. 14 is a diagram illustrating an exemplary result of automatically determining an attribute on the basis of the job classification information;
FIG. 15 is a diagram illustrating exemplary conference URL distribution;
FIG. 16 is a diagram illustrating exemplary attribute specification at a time of conference participation;
FIG. 17 is a diagram illustrating exemplary determination of content viewing authority;
FIG. 18 is a flowchart illustrating an exemplary procedure of an online conference control process;
FIG. 19 is a diagram illustrating a first example of content image distribution of a content to be shared;
FIG. 20 is a diagram illustrating a second example of the content image distribution of the content to be shared;
FIG. 21 is a diagram illustrating an exemplary display screen for an online conference;
FIG. 22 is a diagram illustrating exemplary content image distribution of a content to be shared in a case where a disclosure range is changed;
FIG. 23 is a diagram illustrating an exemplary configuration of a system that holds an online conference with an organizer terminal; and
FIG. 24 is a diagram illustrating another exemplary configuration of the system that holds the online conference with the organizer terminal.

### DESCRIPTION OF EMBODIMENTS+

Hereinafter, the embodiments will be described with reference to the drawings. Note that each of the embodiments may be implemented in combination with a plurality of embodiments as long as no contradiction arises.

### [First Embodiment]

First, a first embodiment will be described. The first embodiment is directed to an information processing method in which access destination location information for conference participation linked to an attribute is distributed to a participant of an online conference and whether to approve or disapprove content transmission to the participant is determined depending on the access destination location information used at the time of participation of the participant.

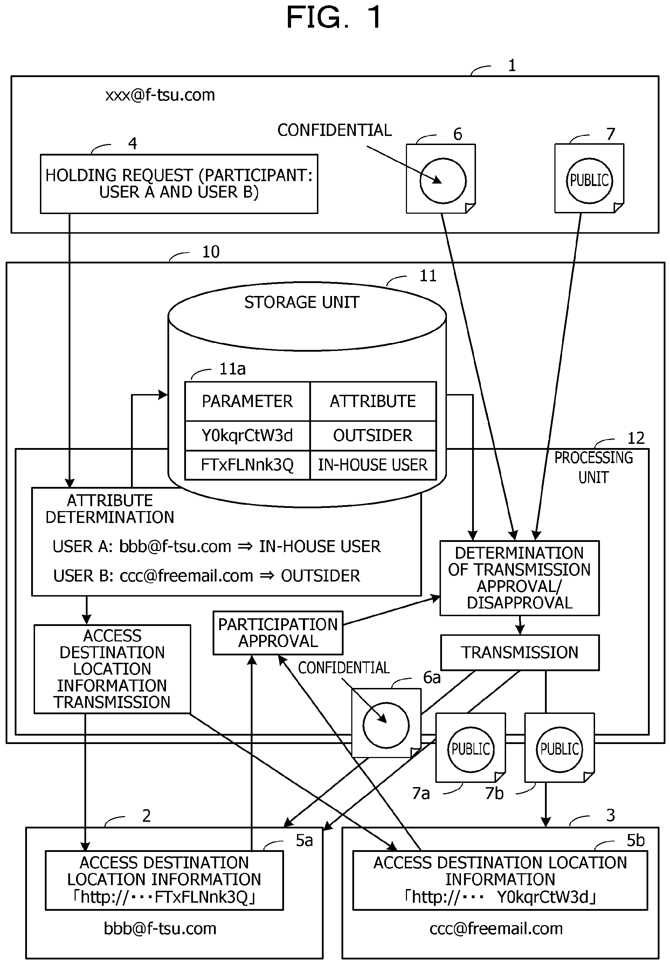

FIG. 1 is a diagram illustrating an exemplary information processing method according to the first embodiment. For example, an information processing apparatus 10 is used to carry out the information processing method. The information processing apparatus 10 is enabled to carry out the information processing method according to the first embodiment by executing an information processing program, for example.

The information processing apparatus 10 includes a storage unit 11 and a processing unit 12. The storage unit 11 is, for example, a memory included in the information processing apparatus 10 or a storage device. The processing unit 12 is, for example, a processor included in the information processing apparatus 10 or an arithmetic circuit.

The information processing apparatus 10 is connected to a terminal 1 used by an organizer of an online conference and terminals 2 and 3 used by participants of the online conference via a network.

The terminal 1 used by the organizer is capable of transmitting a request 4 for holding an online conference to the information processing apparatus 10, transmitting information 6 and 7 (e.g., content image) indicating a content to be shared in the online conference, or the like. The holding request 4 includes, for example, a username of a participant to be invited to the online conference and the like. Information indicating a confidentiality level of the content to be shared is added to the information 6 and 7 indicating the content. In the example of FIG. 1, the confidentiality level of the information 6 indicating the content is "internal use only", and the confidentiality level of the information 7 indicating the content is "public information".

The terminals 2 and 3 used by the participants are capable of accessing the information processing apparatus 10 by designating the location indicated by access destination location information 5a or 5b received from the information processing apparatus 10. The access destination location information 5a and 5b represent, for example, access information to a function (e.g., online conference software) included in the processing unit 12 in the information processing apparatus 10 by a URL. The terminals 2 and 3 access the content indicated by the access destination location information 5a or 5b by, for example, a hypertext transfer protocol (HTTP). The access to the access destination location information 5a or 5b is to be a request for participating in the online conference.

The information processing apparatus 10 transmits the information 6 and 7 indicating the content to be shared only to a terminal used by a participant having viewing authority according to the confidentiality level of the information 6 and 7. The storage unit 11 and the processing unit 12 of the information processing apparatus 10 have the following functions to determine whether to approve or disapprove the transmission of the information 6 and 7 according to the viewing authority.

The storage unit 11 stores a parameter/attribute correspondence table 11a. The parameter/attribute correspondence table 11a is a data table indicating a correspondence relationship between parameters assigned to the access destination location information 5a and 5b and the attributes of the participants of the transmission destination of the access destination location information 5a and 5b. The participant attribute is determined on the basis of a relationship with the organizer of the online conference. Examples of a type of the participant attribute include an "in-house user" belonging to the same company as the organizer, an "outsider" belonging to a company different from the organizer, and the like.

For example, the processing unit 12 determines, in response to the request 4 for holding the online conference, the participant attribute on the basis of information indicating the relationship between the participant and the organizer of the online conference. The information indicating the relationship between the organizer and the participant is, for example, e-mail addresses of the organizer and the participant. In that case, the processing unit 12 determines the participant attribute on the basis of, for example, whether or not the domain names or subdomain names of the e-mail addresses of the organizer and the participant match.

The processing unit 12 may also use conference history information indicating a participation status of the participant in other online conferences in which the organizer has participated as the information indicating the relationship between the organizer and the participant. In that case, the processing unit 12 determines the participant attribute on the basis of, for example, a ratio of presence of the participant in other online conferences in which the organizer has participated.

The processing unit 12 may also use job classification information indicating job classification of the organizer and the participant as the information indicating the relationship between the organizer and the participant. Examples of the job classification information include information regarding an organization to which the organizer and the participant belong, an official position in the organization, and the like.

In parallel with the determination of the attribute of each participant, the processing unit 12 generates the access destination location information 5a or 5b for participating in the online conference corresponding to each participant. The access destination location information 5a and 5b include a value parameter associated with the attribute of the participant of the online conference. For example, the processing unit 12 uses a unique character string for each participant as a parameter. The unique character string is, for example, a randomly generated character string having a predetermined number of characters. The processing unit 12 sets, in the parameter/attribute correspondence table 11a, the correspondence relationships between the parameter values included in the access destination location information 5a and 5b generated in association with the participants and the attributes of the participants.

Then, the processing unit 12 transmits the access destination location information 5a and 5b for participating in the online conference to the participants. For example, the processing unit 12 transmits the access destination location information 5a and 5b by e-mail addressed to the e-mail addresses of the participants. The e-mail is transmitted to the terminals 2 and 3 used by the participants via a mail server (not illustrated).

The processing unit 12 permits the participants to participate in the online conference in response to the accesses designating the access destination location information 5a and 5b from the terminals 2 and 3 used by the participants. Furthermore, the processing unit 12 obtains the information 6 and 7 indicating the content from the terminal 1 used by the organizer. The processing unit 12 refers to the parameter/attribute correspondence table 11a, and identifies the attributes of the participants corresponding to the parameter values included in the access destination location information 5a and 5b used for the accesses at the time of participating in the online conference.

Then, the processing unit 12 determines whether or not to transmit the information 6 and 7 for displaying the content to the terminals 2 and 3 on the basis of the participant attribute and the confidentiality level of the content to be shared in the online conference. For example, the processing unit 12 determines that the information 6 of the content with the confidentiality level "internal use only" is to be transmitted only to the terminal 2 used by the participant with the attribute "in-house user". Furthermore, the processing unit 12 determines that the information 7 of the content with the confidentiality level "public information" is to be transmitted to the terminals 2 and 3 used by the participants with the attribute "in-house user" or "outsider".

The processing unit 12 transmits information 6a, 7a, and/or 7b obtained by replicating the individual pieces of information 6 and 7 to the terminals 2 and 3 determined as a transmission destination. For example, the pieces of information 6a and 7a are transmitted to the terminal 2, and the information 7b is transmitted to the terminal 3.

With the arrangement of determining the viewing authority to the content on the basis of the parameters assigned to the access destination location information 5a and 5b in this manner, it becomes possible to appropriately determine the viewing authority and to suppress erroneous transmission of information indicating the content to a terminal used by a participant not having the viewing authority. As a result, a leak of the confidential information included in the content is suppressed.

Furthermore, the parameter values included in the access destination location information 5a and 5b do not include information regarding the participant attribute. Accordingly, it is difficult for the participants to tamper with the parameter values to fake their own attributes.

Moreover, the parameter value is a unique value generated for each participant, for example. For example, even in a case where there is a plurality of participants with the same attribute, the parameters assigned to the access destination location information transmitted to each of them are different. Since there is no communality of the parameter values between the participants with the same attribute or no regularity of the parameter values for the individual attributes, it is made difficult for a malicious participant to fake the attribute by rewriting the parameter.

### [Second Embodiment]

Next, a second embodiment will be described. In the second embodiment, when an online conference is held by a cloud computing system (hereinafter simply referred to as a cloud), it is made possible to transmit an image of a content to be shared in the online conference only to a participant having viewing authority.

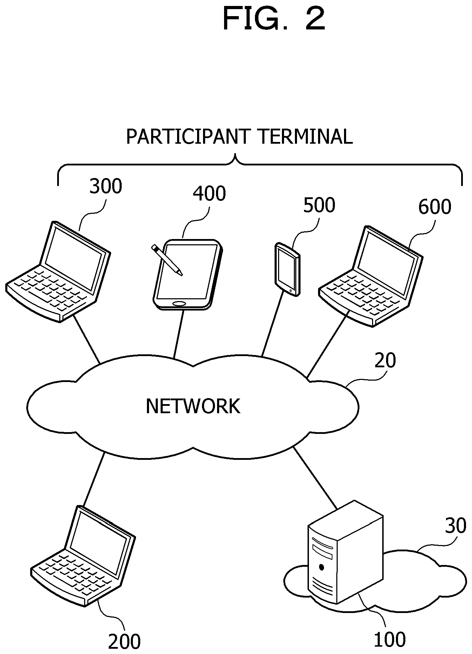

FIG. 2 is a diagram illustrating an exemplary system configuration according to the second embodiment. A server 100, an organizer terminal 200, and a plurality of participant terminals 300, 400, 500, and 600 are connected via a network 20. The server 100 is, for example, a computer that provides an online conference service in a cloud 30. The organizer terminal 200 is a computer used by a user (host) who holds an online conference. The participant terminals 300, 400, 500, and 600 are computers used by users who participate in the online conference. A personal computer, a tablet terminal, a smartphone, and the like may be used as the organizer terminal 200 and the participant terminals 300, 400, 500, and 600.

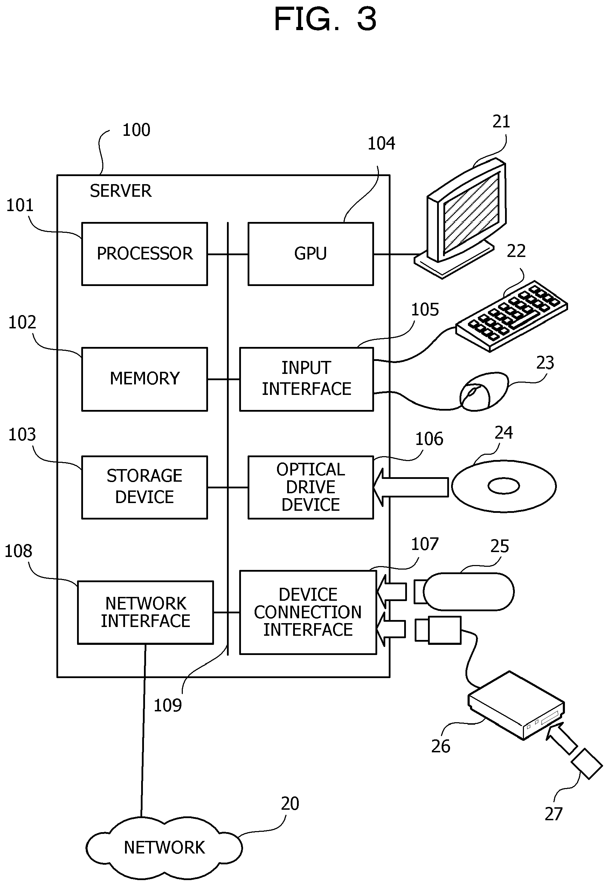

FIG. 3 is a diagram illustrating exemplary hardware of a server. The entire server 100 is controlled by a processor 101. A memory 102 and multiple peripheral devices are connected to the processor 101 via a bus 109. The processor 101 may be a multiprocessor. The processor 101 is, for example, a central processing unit (CPU), a micro processing unit (MPU), or a digital signal processor (DSP). At least a part of functions implemented by the processor 101 executing a program may be implemented by an electronic circuit such as an application specific integrated circuit (ASIC), a programmable logic device (PLD), or the like.

The memory 102 is used as a main storage device of the server 100. The memory 102 temporarily stores at least a part of a program of an operating system (OS) and an application program to be executed by the processor 101. Furthermore, the memory 102 stores various types of data to be used in processing by the processor 101. As the memory 102, for example, a volatile semiconductor storage device such as a random-access memory (RAM) is used.

Examples of the peripheral devices connected to the bus 109 include a storage device 103, a graphics processing unit (GPU) 104, an input interface 105, an optical drive device 106, a device connection interface 107, and a network interface 108.

The storage device 103 electrically or magnetically performs data writing/reading on a built-in recording medium. The storage device 103 is used as an auxiliary storage device of a computer. The storage device 103 stores an OS program, an application program, and various types of data. Note that, as the storage device 103, for example, a hard disk drive (HDD) or a solid state drive (SSD) may be used.

The GPU 104 is an arithmetic unit that performs image processing, and is also called a graphic controller. A monitor 21 is connected to the GPU 104. The GPU 104 causes an image to be displayed on a screen of the monitor 21 in accordance with an instruction from the processor 101. Examples of the monitor 21 include a display device using organic electro luminescence (EL), a liquid crystal display device, and the like.

A keyboard 22 and a mouse 23 are connected to the input interface 105. The input interface 105 transmits signals transmitted from the keyboard 22 and the mouse 23 to the processor 101. Note that the mouse 23 is an example of a pointing device, and another pointing device may also be used. Examples of the another pointing device include a touch panel, a tablet, a touch pad, a track ball, and the like.

The optical drive device 106 uses laser light or the like to read data recorded in an optical disk 24 or write data to the optical disk 24. The optical disk 24 is a portable recording medium in which data is recorded to be readable by reflection of light. Examples of the optical disk 24 include a digital versatile disc (DVD), a DVD-RAM, a compact disc read only memory (CD-ROM), a CDrecordable (R)/rewritable (RW), and the like.

The device connection interface 107 is a communication interface for connecting peripheral devices to the server 100. For example, a memory device 25 and a memory reader/writer 26 may be connected to the device connection interface 107. The memory device 25 is a recording medium equipped with a communication function with the device connection interface 107. The memory reader/writer 26 is a device that writes data in a memory card 27 or reads data from the memory card 27. The memory card 27 is a card type recording medium.

The network interface 108 is connected to a network 20. The network interface 108 exchanges data with another computer or a communication device via the network 20. The network interface 108 is a wired communication interface connected to a wired communication device such as a switch, a router, or the like with a cable, for example. Furthermore, the network interface 108 may also be a wireless communication interface that is connected to and communicates with a wireless communication device such as a base station, an access point, or the like by radio waves.

The server 100 may be implemented by the hardware as described above. The organizer terminal 200 and the participant terminals 300, 400, 500, and 600 may also be implemented by hardware similar to that of the server 100. Furthermore, the information processing apparatus 10 indicated in the first embodiment may also be implemented by hardware similar to that of the server 100 illustrated in FIG. 3.

The server 100 implements the processing function of the second embodiment by, for example, executing a program recorded in a computerreadable recording medium. The program in which processing contents to be executed by the server 100 are described may be recorded in various recording media. For example, the program to be executed by the server 100 may be stored in the storage device 103. The processor 101 loads at least a part of the programs in the storage device 103 into the memory 102, and executes the program. Furthermore, the program to be executed by the server 100 may be recorded in a portable recording medium such as the optical disk 24, the memory device 25, the memory card 27, or the like. The program stored in the portable recording medium may be executed after being installed in the storage device 103 under control of the processor 101, for example. Furthermore, the processor 101 may read the program directly from the portable recording medium, and execute it.

In order to reduce the risk of information leaks in the online conference, the server 100 determines whether to approve or disapprove content sharing for each of the participant terminals 300, 400, 500, and 600 on the basis of a confidentiality level of the content to be shared and an attribute of a participant of the online conference. This makes it possible to suppress content viewing by a participant having no content viewing authority.

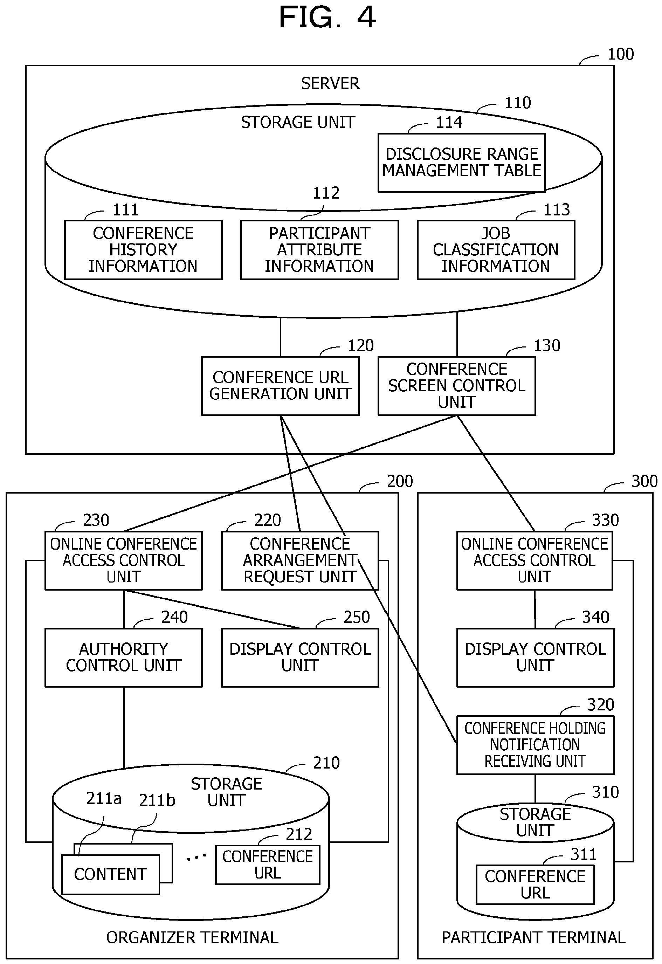

FIG. 4 is a block diagram illustrating exemplary functions of individual devices. Note that only the participant terminal 300 out of the plurality of participant terminals 300, 400, 500, and 600 is representatively illustrated in FIG. 4. The participant terminals 400, 500, and 600 not illustrated in FIG. 4 also have functions similar to those of the participant terminal 300.

The server 100 includes a storage unit 110, a conference URL generation unit 120, and a conference screen control unit 130.

The storage unit 110 stores conference history information 111, participant attribute information 112, job classification information 113, and a disclosure range management table 114. The conference history information 111 is information indicating a participation history of past online conferences of a user of an online conference system (including an organizer and a participant of an online conference to be held). The participant attribute information 112 is information indicating an automated determination result of a participant attribute. The job classification information 113 is information indicating job classification of each user. The disclosure range management table 114 is information indicating whether or not to disclose the content to the participants with the corresponding attribute for each combination of the participant attribute and the confidentiality level of the content.

Types of the confidentiality level are as follows. - Confidential information: It is to be set to a content that can be viewed only by participants having a close business relationship with the organizer. - Related party and internal use only: It is to be set to a content that can be viewed only by participants in the same project as the organizer. - Internal use only: It is to be set to a content that can be viewed only by participants in the same organization as the organizer. - Internal use only (group): It is to be set to a content that can be viewed only by participants in the same group organization as the organizer. - Public information: It is to be set to a content that can be viewed by anyone.

Types of the participant attribute are as follows. - Related person: It indicates that the participant is a user who belongs to the same project as the organizer. - In-house user: It indicates that the participant is a user who belongs to the same organization as the organizer. - Group user: It indicates that the participant is a user who belongs to the same group organization as the organizer. - Outsider: It indicates that the participant is an outside user.

The conference URL generation unit 120 generates a URL for each participant for participating in the online conference in response to a request for arranging the online conference. The conference URL generation unit 120 transmits the generated URL to the participant terminal 300 used by the participant corresponding to the URL. The conference URL generation unit 120 also generates a conference URL for the organizer. The conference URL generation unit 120 transmits the conference URL generated for the organizer to the organizer terminal 200.

Note that a parameter of a unique character string is set in the conference URL transmitted to the participant terminal 300. The parameter is managed in association with the attribute of the participant of the transmission destination of the conference URL.

Furthermore, the conference URL generation unit 120 determines the participant attribute on the basis of a relationship between the user (organizer) who has requested the online conference arrangement and the participant. Then, the conference URL generation unit 120 sets, in the participant attribute information 112, the URL transmitted to the participant and the attribute in association with each other.

The conference screen control unit 130 controls a screen to be displayed on the participant terminal used by the participant of the online conference. For example, the conference screen control unit 130 causes the content to be shared specified by the organizer to be displayed on the screen of the participant terminal of the participant who is allowed to display the content.

The organizer terminal 200 includes a storage unit 210, a conference arrangement request unit 220, an online conference access control unit 230, an authority control unit 240, and a display control unit 250.

The storage unit 210 stores contents 211a, 211b, and so on to be shared in the online conference, and a conference URL 212. A confidentiality level is set for each of the contents 211a, 211b, and so on.

The conference arrangement request unit 220 transmits a request for arranging the conference to the server 100. For example, the conference arrangement request unit 220 transmits the request for arranging the conference including information indicating the date and time of the online conference, the organizer and the participants, and the like on the basis of an input from the organizer. When the conference arrangement request unit 220 receives, from the server 100, the conference URL 212 for the organizer of the arranged online conference, it stores the conference URL 212 in the storage unit 210.

The online conference access control unit 230 accesses the online conference arranged in the server 100 in accordance with an instruction from the organizer. For example, the online conference access control unit 230 is enabled to access the online conference by designating the conference URL 212 stored in the storage unit 210 and accessing the server 100. When the online conference access control unit 230 obtains screen information of the online conference from the server 100, it transmits the screen information to the display control unit 250. Furthermore, the online conference access control unit 230 receives an input of an instruction for sharing the content from the organizer, and transmits an image of the content to be shared to the server 100 in accordance with the instruction.

In a case where the content to be shared in the online conference is specified, the authority control unit 240 obtains the confidentiality level assigned to the content. The authority control unit 240 opens a window for displaying the specified content, and sets the image in the window as a content image to be shared. Then, the authority control unit 240 assigns the confidentiality level of the content from which the content image is generated to the content image to be shared, and transmits it to the online conference access control unit 230. The content image to which the confidentiality level is assigned is transmitted to the server 100 via the online conference access control unit 230.

The display control unit 250 displays a screen of the online conference of the organizer. Note that the image of the content to be shared specified by the organizer is displayed on the screen of the online conference of the organizer at all times.

The participant terminal 300 includes a storage unit 310, a conference holding notification receiving unit 320, an online conference access control unit 330, and a display control unit 340.

The storage unit 310 stores a conference URL 311 of the online conference notified from the server 100.

The conference holding notification receiving unit 320 receives online conference holding notification from the server 100. The holding notification includes the conference URL 311 for the participant using the participant terminal 300. The conference holding notification receiving unit 320 stores the conference URL 311 included in the holding notification in the storage unit 310. In a case where the online conference holding notification is transmitted from the server 100 by e-mail, the mailer of the e-mail functions as the conference holding notification receiving unit 320.

The online conference access control unit 330 accesses the online conference arranged in the server 100 in accordance with an instruction from the participant. For example, the online conference access control unit 330 is enabled to access the online conference by designating the conference URL 311 stored in the storage unit 310 and accessing the server 100. When the online conference access control unit 330 obtains screen information of the online conference from the server 100, it transmits the screen information to the display control unit 340.

The display control unit 340 displays a screen of the online conference of the participant. Note that the screen of the content to be shared specified by the organizer is displayed on the screen of the online conference of the participant only in a case where the participant using the participant terminal 300 is allowed to view it.

Note that, lines connecting the individual elements illustrated in FIG. 4 indicate a part of a communication path, and a communication path other than the illustrated communication path may also be set. Furthermore, the function of each element illustrated in FIG. 4 may be implemented by, for example, causing the computer to execute a program module corresponding to the element.

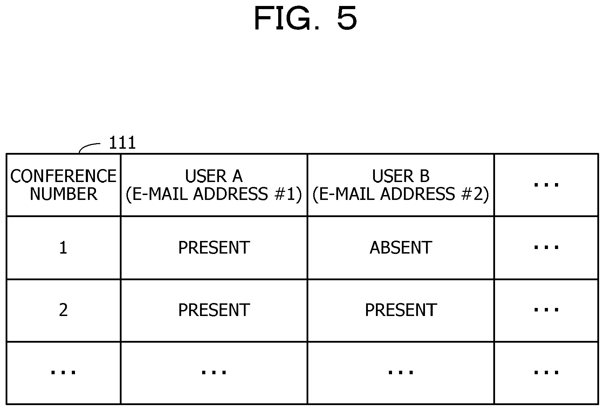

Next, information stored in the storage unit 110 of the server 100 will be specifically described with reference to FIGs. 5 to 8.

FIG. 5 is a diagram illustrating exemplary conference history information. For example, a record for each online conference is registered in the conference history information 111. In each record, for each user indicated by a username, information indicating whether or not the user has participated is set in association with a conference number of the online conference. In the example of FIG. 5, the user with the username "user A" has participated in the online conference with the conference number "1", and the user with the username "user B" has not participated. It is also possible to use an e-mail address of the user instead of the username of the user.

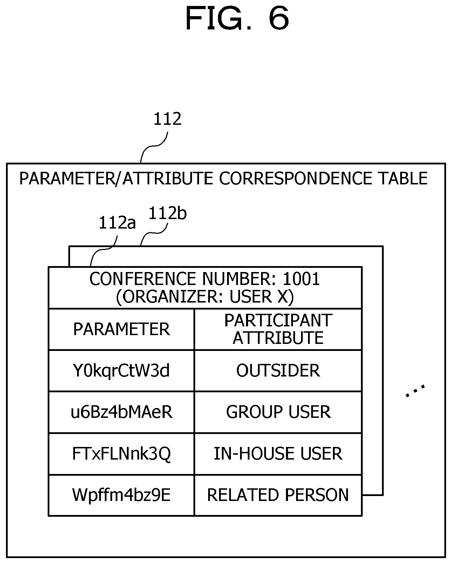

FIG. 6 is a diagram illustrating exemplary participant attribute information. For example, the participant attribute information 112 includes parameter/attribute correspondence tables 112a, 112b, and so on for each online conference. In the parameter/attribute correspondence tables 112a, 112b, and so on, a conference number of an online conference and a username of an organizer are set. Additionally, in the parameter/attribute correspondence tables 112a, 112b, and so on, a set of a parameter assigned to a participant invited to the online conference and the attribute of the participant is registered.

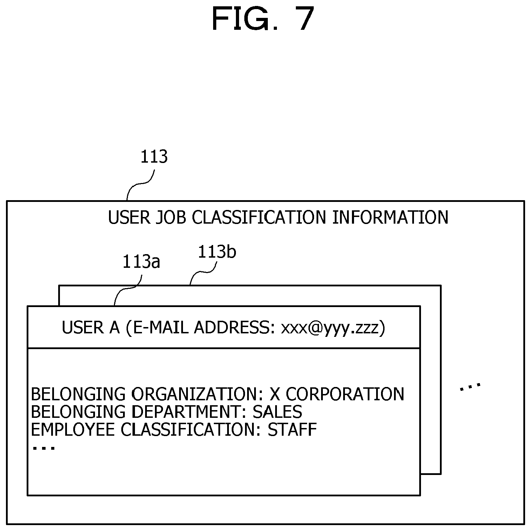

FIG. 7 is a diagram illustrating exemplary job classification information. For example, the job classification information 113 includes user job classification information 113a, 113b, and so on for individual users. A username and an e-mail address of the user are set in the user job classification information 113a, 113b, and so on. Furthermore, in the user job classification information 113a, 113b, and so on, for example, information regarding an organization to which the user belongs (e.g., company name), a department to which the user belongs, employee classification, and the like is set.

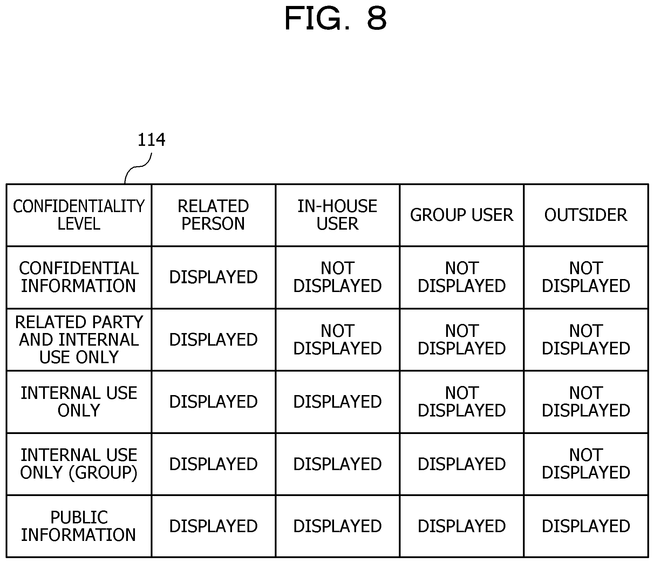

FIG. 8 is a diagram illustrating an exemplary disclosure range management table. For example, the disclosure range management table 114 is a tabular data table in which a confidentiality level is assigned to each column and user job classification is assigned to each row. At the intersection of a certain confidentiality level and certain job classification, whether or not to display the content of the confidentiality level on the participant terminal of the user of the job classification is set.

In the example of FIG. 8, it is indicated that the content of the confidentiality level "confidential information" is displayed only on the participant terminal of the participant with the attribute "related person" and is not displayed on the participant terminals of the other participants. It is indicated that the content of the confidentiality level "related party and internal use only" is displayed only on the participant terminal of the participant with the attribute "related person" and is not displayed on the participant terminals of the other participants. It is indicated that the content with the confidentiality level "internal use only" is displayed on the participant terminal of the participant with the attribute "related person" or "in-house user" and is not displayed on the participant terminals of the other participants. It is indicated that the content of the confidentiality level "internal use only (group)" is displayed on the participant terminal of the participant with the attribute "related person", "in-house user", or "group user" and is not displayed on the participant terminal of the participant with the attribute "outsider". It is indicated that the content of the confidentiality level "public information" is displayed on the participant terminals of all the participants regardless of the attributes of the participants.

The server 100 distributes the conference URL to the participants and controls the screen of the online conference by referring to the information illustrated in FIGs. 5 to 8.

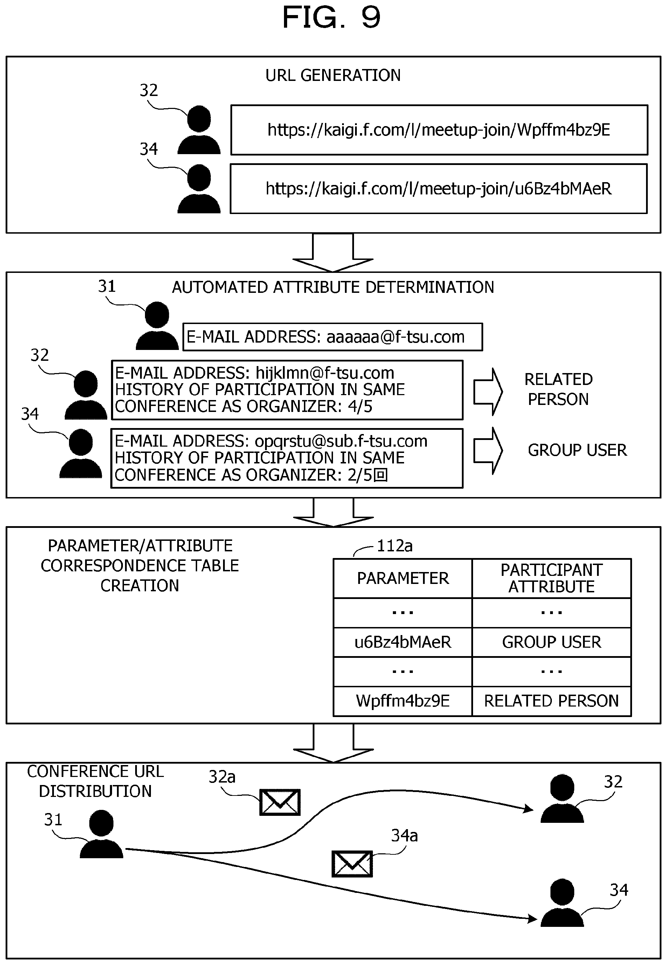

FIG. 9 is a diagram illustrating exemplary generation and distribution of the conference URL. In the example of FIG. 9, it is assumed that an organizer 31 holds an online conference in which a supervisor of the organizer 31 and a person in charge of an outsourcing company are included as participants 32 and 34. When the organizer 31 inputs an instruction for arranging an online conference to the organizer terminal 200, a request for arranging the online conference is transmitted from the organizer terminal 200 to the server 100. Then, a conference URL for each of the participants 32 and 34 is generated in the server 100. In the example of FIG. 9, URLs up to "https://kaigi.f.com/l/meetup-join/" are common in the respective conference URLs. The common part of the conference URL indicates location information corresponding to a storage location of a file, such as a program of the conference screen control unit 130 of the server 100, for example.

In the conference URL for the participant 32, a value of the assigned parameter is "Wpffm4bz9E". Furthermore, in the conference URL for the participant 34, a value of the assigned parameter is "u6Bz4bMAeR".

Thereafter, the attribute of each of the participants 32 and 34 is automatically determined. The server 100 may use, for example, e-mail addresses of the organizer 31 and the individual participants 32 and 34 for automated attribute determination. Furthermore, the server 100 may use a participation frequency of each of the participants 32 and 34 for the online conferences in which the organizer 31 has participated in the past. By using those kinds of information, in the example of FIG. 9, the attribute of the participant 32 is determined as "related person", and the attribute of the participant 34 is determined as "group user".

The server 100 creates the parameter/attribute correspondence table 112a on the basis of the result of the automated attribute determination. For example, the set of the parameter "Wpffm4bz9E" corresponding to the participant 32 and the attribute (related person) of the participant 32 is registered in the parameter/attribute correspondence table 112a. Furthermore, the set of the parameter "u6Bz4bMAeR" corresponding to the participant 34 and the attribute "group user" of the participant 34 is registered in the parameter/attribute correspondence table 112a.

The server 100 sends an e-mail 32a including the conference URL for the participant 32 to the e-mail address of the participant 32 with the sender as the organizer 31. Furthermore, the server 100 sends an e-mail 34a including the conference URL for the participant 34 to the e-mail address of the participant 34 with the sender as the organizer 31.

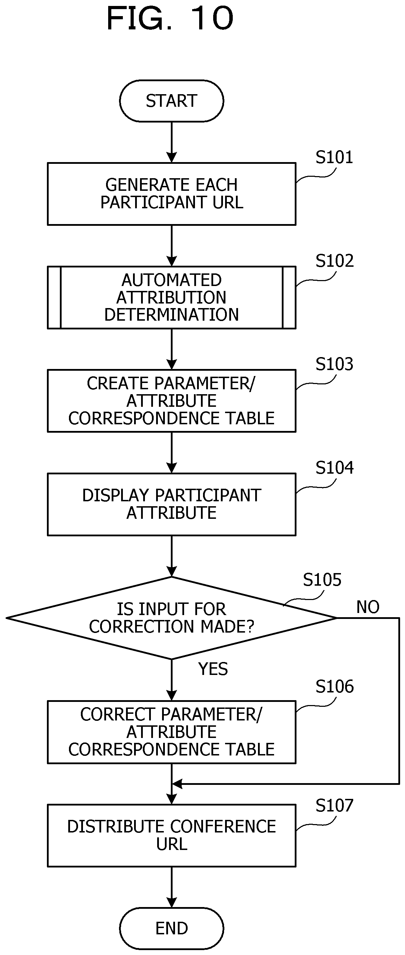

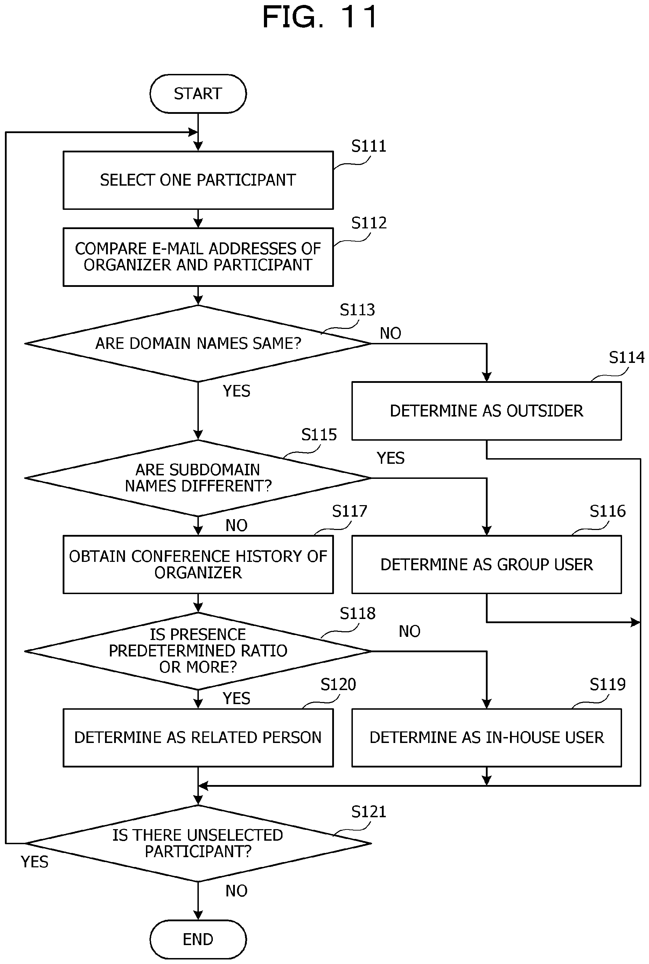

Each participant who has obtained the conference URL is enabled to participate in the online conference by accessing the obtained conference URL using any terminal. Hereinafter, a procedure of a conference URL distribution process will be described in detail with reference to FIGs. 10 and 11.

FIG. 10 is a flowchart illustrating an exemplary procedure of the conference URL distribution process. Hereinafter, the process illustrated in FIG. 10 will be described in accordance with step numbers.

[Step S101] When the conference URL generation unit 120 receives a request for arranging an online conference from the conference arrangement request unit 220 of the organizer terminal 200, it generates an URL for a participant of the online conference. Note that the participant of the online conference is indicated in the arrangement request by a username, an e-mail address, or the like. For example, the conference URL generation unit 120 adds a unique character string for each participant as a parameter to the end of the URL indicating the online conference to be held.

[Step S102] The conference URL generation unit 120 carries out an automated attribute determination process for each participant. Details of the automated attribute determination process will be described later (see FIG. 11).

[Step S103] The conference URL generation unit 120 creates a parameter/attribute correspondence table of the online conference to be held. For example, the conference URL generation unit 120 generates, for each participant, a record including the parameter of the participant generated in step S101 and the attribute determined in step S102. Then, the conference URL generation unit 120 newly creates a parameter/attribute correspondence table including the record for each participant, and stores it in the storage unit 110.

[Step S104] The conference URL generation unit 120 transmits the attribute determined for each participant to the organizer terminal 200, and causes the organizer terminal 200 to display the participant attribute. The organizer of the online conference determines whether or not the attribute automatically determined for each participant is correct on the basis of the displayed attribute.

If the attribute is determined to be incorrect, the organizer inputs an instruction for correcting the attribute to the organizer terminal 200. When the instruction for correcting the attribute is input, the organizer terminal 200 transmits an attribute correction request to the server 100. The attribute correction request includes, for example, the username of the participant to be corrected, and the corrected attribute.

Furthermore, if there is no error in the automatically determined attribute, the organizer makes an input of confirmation completion. When the input of the confirmation completion is made, the organizer terminal 200 transmits a confirmation request to the server 100.

[Step S105] The conference URL generation unit 120 determines whether or not an input for correcting the attribute is made by the organizer. For example, if the conference URL generation unit 120 receives the attribute correction request from the organizer terminal 200, it determines that a correction input is made. Furthermore, if the conference URL generation unit 120 receives the confirmation request from the organizer terminal 200, it determines that no correction input is made. The conference URL generation unit 120 advances the process to step S106 if the correction input is made. Furthermore, the conference URL generation unit 120 advances the process to step S107 if no correction input is made.

[Step S106] The conference URL generation unit 120 corrects the parameter/attribute correspondence table created in step S103 in accordance with the correction input.

[Step S107] The conference URL generation unit 120 distributes, to each participant, the conference URL generated for the participant. For example, the conference URL generation unit 120 sends an e-mail in which the URL for the participant is described to the e-mail address indicated in the user job classification information of the participant. The sent e-mail is forwarded to the participant terminal used by the participant via a mail server (not illustrated). Furthermore, the conference URL generation unit 120 transmits the conference URL for the organizer to the organizer terminal 200.

In this manner, the conference URLs generated for the individual participants are distributed to the participants. At that time, the conference URL generation unit 120 sets, in the parameter/attribute correspondence table, a correspondence relationship between the parameter assigned to the conference URL and the attribute of the participant corresponding to the conference URL. This makes it possible to determine the attribute of the participant on the basis of the conference URL when the participant has accessed the online conference.

Next, the automated attribute determination process will be described in detail.

FIG. 11 is a flowchart illustrating an exemplary procedure of the automated attribute determination process. Hereinafter, the process illustrated in FIG. 11 will be described in accordance with step numbers.

[Step S111] The conference URL generation unit 120 selects one unselected participant.

[Step S112] The conference URL generation unit 120 compares the e-mail addresses of the organizer and the selected participant. The e-mail addresses of the organizer and the participant may be obtained from, for example, the job classification information 113.

[Step S113] The conference URL generation unit 120 determines whether or not the domain names of the e-mail addresses of the organizer and the selected participant are the same. If the domain names are the same, the conference URL generation unit 120 advances the process to step S115. If the domain names are different, the conference URL generation unit 120 advances the process to step S114.

[Step S114] The conference URL generation unit 120 determines the attribute of the selected participant as an "outsider", and advances the process to step S121.

[Step S115] The conference URL generation unit 120 determines whether or not the subdomain names of the organizer and the participant are different. If the subdomain names are different, the conference URL generation unit 120 advances the process to step S116. Furthermore, if the subdomain names are the same, the conference URL generation unit 120 advances the process to step S117.

[Step S116] The conference URL generation unit 120 determines the attribute of the selected participant as a "group user", and advances the process to step S121.

[Step S117] The conference URL generation unit 120 obtains a conference history of the latest predetermined number of online conferences in which the organizer has participated.

[Step S118] The conference URL generation unit 120 determines whether or not the selected participant has been present in equal to or more than a predetermined ratio of the online conferences in which the organizer has participated. For example, the conference URL generation unit 120 determines whether or not the participant has been present in 80% or more of the latest five conferences in which the organizer has attended. If present at equal to or more than the predetermined ratio, the conference URL generation unit 120 advances the process to step S120. Furthermore, if present at less than the predetermined ratio, the conference URL generation unit 120 advances the process to step S119.

[Step S119] The conference URL generation unit 120 determines the attribute of the selected participant as an "in-house user", and advances the process to step S121.

[Step S120] The conference URL generation unit 120 determines the attribute of the selected participant as a "related person".

[Step S121] The conference URL generation unit 120 determines whether or not there is an unselected participant. If there is an unselected participant, the conference URL generation unit 120 advances the process to step S111. Furthermore, if all the participants have been selected, the conference URL generation unit 120 terminates the automated attribute determination process.

In this manner, the attribute of each participant is automatically determined on the basis of the e-mail address and the conference history information 111. For example, if the domain names of the e-mail addresses of the organizer and the participant are different, it is determined that the attribute is an "outsider". Furthermore, if the subdomain names are different while the domain names are the same, it is determined that the attribute is a "group user". For example, while the domain name of the e-mail address of the participant 34 (person in charge of the outsourcing company) illustrated in FIG. 9 is the same as that of the e-mail address of the organizer 31, the subdomain name is different. Accordingly, the attribute of the participant 34 is to be a "group user".

For example, in a case where the e-mail addresses of the organizer and the participant are the same up to the subdomain name, the conference history information 111 is referred to. For example, in a case where the participant 32 is a supervisor of the organizer 31 as illustrated in FIG. 9, the e-mail addresses are the same up to the subdomain names, and the attribute of the participant 32 is determined on the basis of the conference history information 111, accordingly.

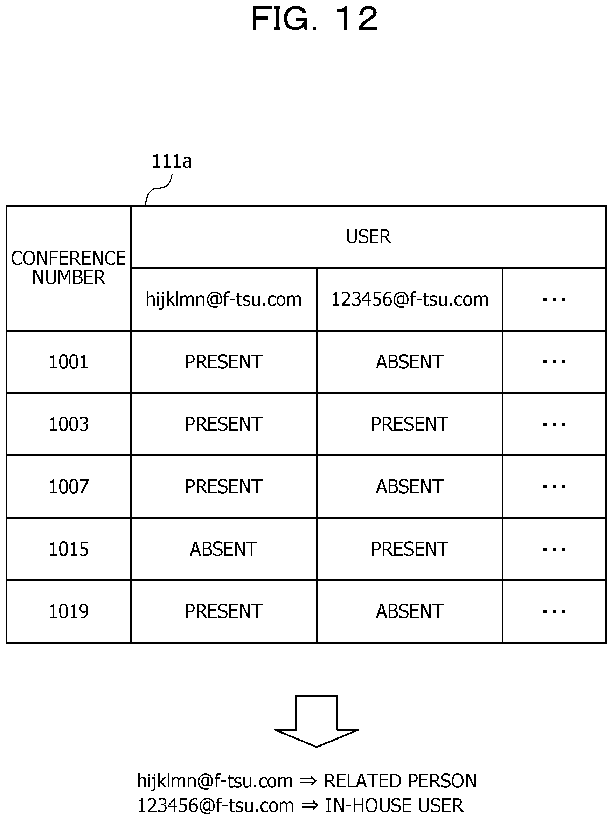

FIG. 12 is a diagram illustrating exemplary automated attribute determination of participants based on the conference history information. In a case of carrying out the automated attribute determination of the participants on the basis of the conference history information 111, an organizer conference participation history 111a is extracted from the conference history information 111. Here, it is assumed that the predetermined number in step S117 is "five times". In that case, the organizer conference participation history 111a includes a participation history of the latest five online conferences of the organizer 31. In the organizer conference participation history 111a, whether or not each of other users has participated in the online conference is set in association with the conference number of the online conference in which the organizer 31 has participated.

In the example of FIG. 12, it is assumed that the user with the e-mail address "hijklmn@f-tsu.com" (participant 32 illustrated in FIG. 9) and the user with the e-mail address "123456@f-tsu.com" are specified as participants in the holding request. Here, it is assumed that the predetermined ratio in step S117 is "80%".

The user with the e-mail address ""hijklmn@f-tsu.com" has been present in four online conferences of the five online conferences, which indicates participation of equal to or more than 80%. Accordingly, the attribute of the corresponding user is to be a "related person".

The user with the e-mail address "123456@f-tsu.com" has been present in only two online conferences of the five online conferences, and an attendance rate is less than 80%. Accordingly, the attribute of the corresponding user is to be an "in-house user".

While the attributes of the participants are automatically determined on the basis of the e-mail addresses and the conference history information 111 in the examples of FIGs. 11 and 12, the automated determination may be carried out by another method. For example, the attributes of the participants may be automatically determined on the basis of the job classification information 113.

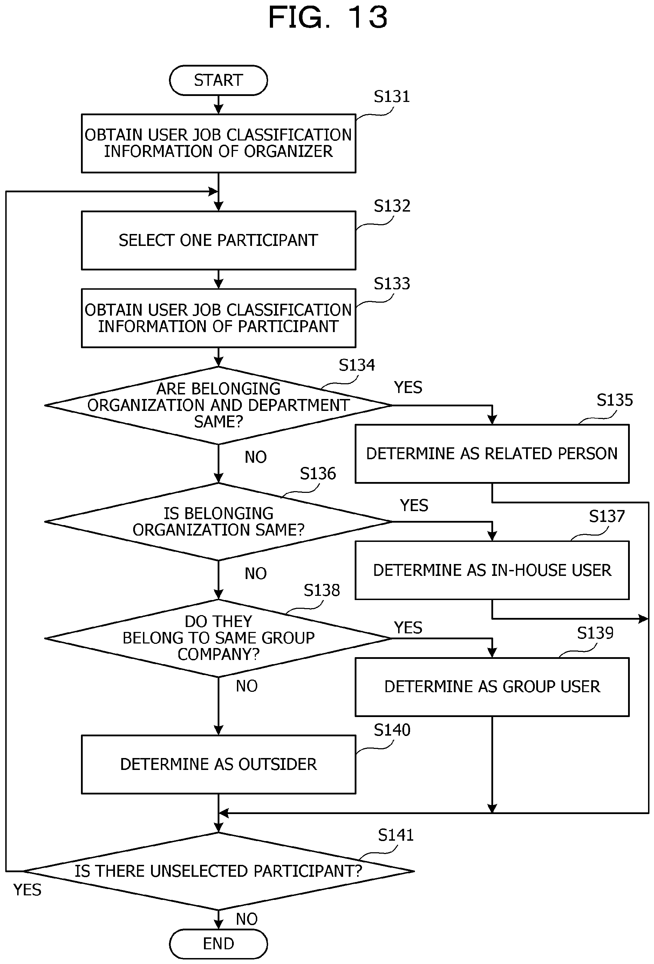

FIG. 13 is a diagram illustrating exemplary automated attribute determination based on the job classification information. Hereinafter, the process illustrated in FIG. 13 will be described in accordance with step numbers.

[Step S131] The conference URL generation unit 120 obtains user job classification information of the organizer from the job classification information 113.

[Step S132] The conference URL generation unit 120 selects one unselected participant.

[Step S133] The conference URL generation unit 120 obtains user job classification information of the selected participant from the job classification information 113.

[Step S134] The conference URL generation unit 120 compares the user job classification information of the organizer and the selected participant to determine whether or not the organization and the department to which they belong are the same. If the organization and the department to which they belong are the same, the conference URL generation unit 120 advances the process to step S135. Furthermore, if at least one of the organizations and the department to which they belong is different, the conference URL generation unit 120 advances the process to step S136.

[Step S135] The conference URL generation unit 120 determines the attribute of the selected participant as a "related person", and advances the process to step S141.

[Step S136] The conference URL generation unit 120 compares the user job classification information of the organizer and the selected participant to determine whether or not the organization to which they belong is the same. If the organization to which they belong is the same, the conference URL generation unit 120 advances the process to step S137. Furthermore, if the organization to which they belong is different, the conference URL generation unit 120 advances the process to step S138.

[Step S137] The conference URL generation unit 120 determines the attribute of the selected participant as an "in-house user", and advances the process to step S141.

[Step S138] The conference URL generation unit 120 compares the user job classification information of the organizer and the selected participant to determine whether or not they belong to the same group company. If they belong to the same group company, the conference URL generation unit 120 advances the process to step S139. Furthermore, if they do not belong to the same group company, the conference URL generation unit 120 advances the process to step S140.

[Step S139] The conference URL generation unit 120 determines the attribute of the selected participant as a "group user", and advances the process to step S141.

[Step S140] The conference URL generation unit 120 determines the attribute of the selected participant as an "outsider".

[Step S141] The conference URL generation unit 120 determines whether or not there is an unselected participant. If there is an unselected participant, the conference URL generation unit 120 advances the process to step S132. Furthermore, if all the participants have been selected, the conference URL generation unit 120 terminates the automated attribute determination process.

In this manner, it is possible to automatically determine the attribute of each participant using the job classification information 113.

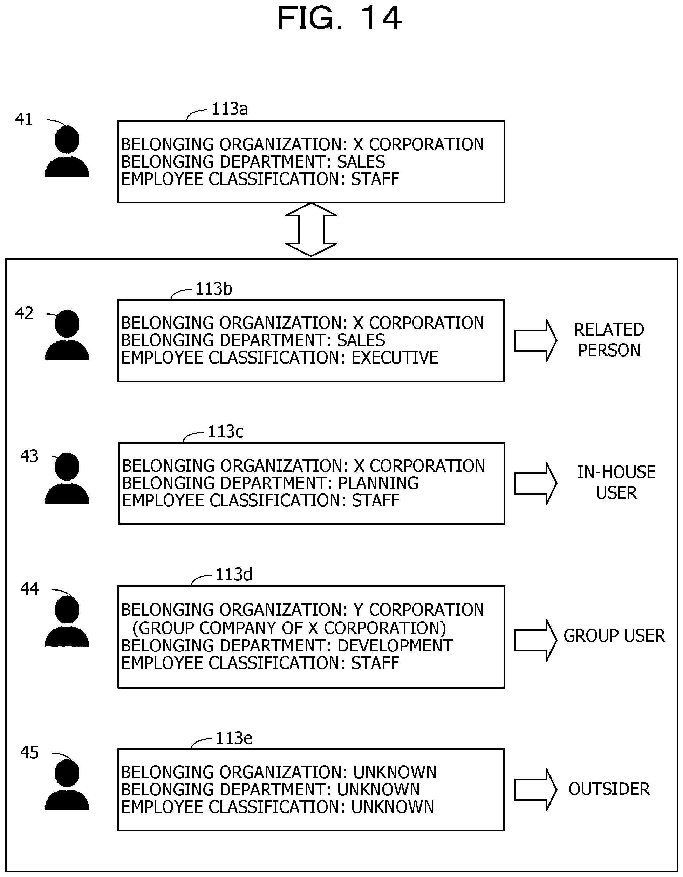

FIG. 14 is a diagram illustrating an exemplary result of automatically determining the attribute on the basis of the job classification information. For example, it is assumed that "belonging organization: X corporation, belonging department: sales, employee classification: staff" is set in the user job classification information 113a of an organizer 41 of an online conference.

In the user job classification information 113b of a participant 42, "belonging organization: X corporation, belonging department: sales, employee classification: executive" is set. Comparing the user job classification information 113a of the organizer 41 and the user job classification information 113b of the participant 42, the belonging organization and the belonging department are the same. Accordingly, the attribute of the participant 42 is determined as a "related person".

In user job classification information 113c of a participant 43, "belonging organization: X corporation, belonging department: planning, employee classification: staff" is set. Comparing the user job classification information 113a of the organizer 41 and the user job classification information 113c of the participant 43, the belonging department is different while the belonging organization is the same. Accordingly, the attribute of the participant 43 is determined as an "in-house user".

In user job classification information 113d of a participant 44, "belonging organization: Y corporation, belonging department: development, employee classification: staff" (Y corporation is a group company of X corporation) is set. Comparing the user job classification information 113a of the organizer 41 and the user job classification information 113d of the participant 44, it is understood that they belong to the same group company while the belonging organizations are different. Accordingly, the attribute of the participant 44 is determined as a "group user".

In user job classification information 113e of a participant 45, "belonging organization: unknown, belonging department: unknown, employee classification: unknown" is set. Even by referring to the user job classification information 113e of the participant 45, a belonging organization is unknown. In this case, it is determined that the participant 45 belongs to an organization different from the organizer 41 and does not belong to a group company. Accordingly, the attribute of the participant 45 is determined as an "outsider".

Note that it is also possible to combine the automated determination process using the job classification information 113 with the automated determination process based on the e-mail address and the conference history information 111. For example, the conference URL generation unit 120 may carry out the automated attribute determination based on the job classification information 113 for a participant whose user job classification information is registered in the job classification information 113, and may carry out the automated determination process based on the e-mail address and the conference history information 111 for the other participants.

For example, the participant 45 illustrated in FIG. 14 may belong to the same organization or group company as the organizer 41 although the user job classification information 113e is not registered. In view of the above, the conference URL generation unit 120 may carry out the automated attribute determination based on the job classification information for the participants 42 to 44, and may carry out the automated determination process based on the e-mail address and the conference history information 111 for the participant 45.

Note that, while the belonging organization, the belonging department, and the employee classification are indicated in the user job classification information 113a, 113b, and so on in the examples of FIGs. 7 and 14, information other than those may be included in the user job classification information 113a, 113b, and so on. For example, a name of a gathering (working group, committee, etc.) for discussing a specific topic may be included in the user job classification information 113a, 113b, and so on. In this case, the conference URL generation unit 120 may determine that an attribute of a participant who belongs to the same organization as the organizer and belongs to the same working group or committee as the organizer is a "related person".

Furthermore, the user job classification information 113a, 113b, and so on may include duties such as a client name of a client in charge, a region/area in charge, products/services in charge, and the like. In a case where the user job classification information 113a, 113b, and so on include the duties such as the client in charge, the conference URL generation unit 120 may determine an attribute of a participant having the same duties such as the client in charge as the organizer and belonging to the same organization as a "related person".

Moreover, for example, a situation in which multiple job positions are combined or a situation of a provisional combination with a previous job position before a transfer due to succession or the like may be added to the user job classification information 113a, 113b, and so on. For example, in the user job classification information 113a, 113b, and so on, multiple job positions may be set for one user. In this case, for example, in the determination in steps S134, S136, and S138, the conference URL generation unit 120 sets a determination result of each step to "YES" if it can be determined as "YES" for at least one of the job positions.

The user job classification information 113a, 113b, and so on may include information regarding a country or a region to which the participant belongs for the purpose of export control. In a case where the user job classification information 113a, 113b, and so on include information regarding a country or a region to which the participant belongs, the attribute "group user" may be divided into a "group user in the same region" and a "group user in another region". In this case, "confidential - same region only" may be set as a confidentiality level, for example. A content of the confidentiality level "confidential - same region only" is a content displayed for the "group user in the same region" and not displayed for the "group user in another region".

When the attribute of the participant is determined as described above, a conference URL including a parameter associated with the attribute is distributed to each participant.

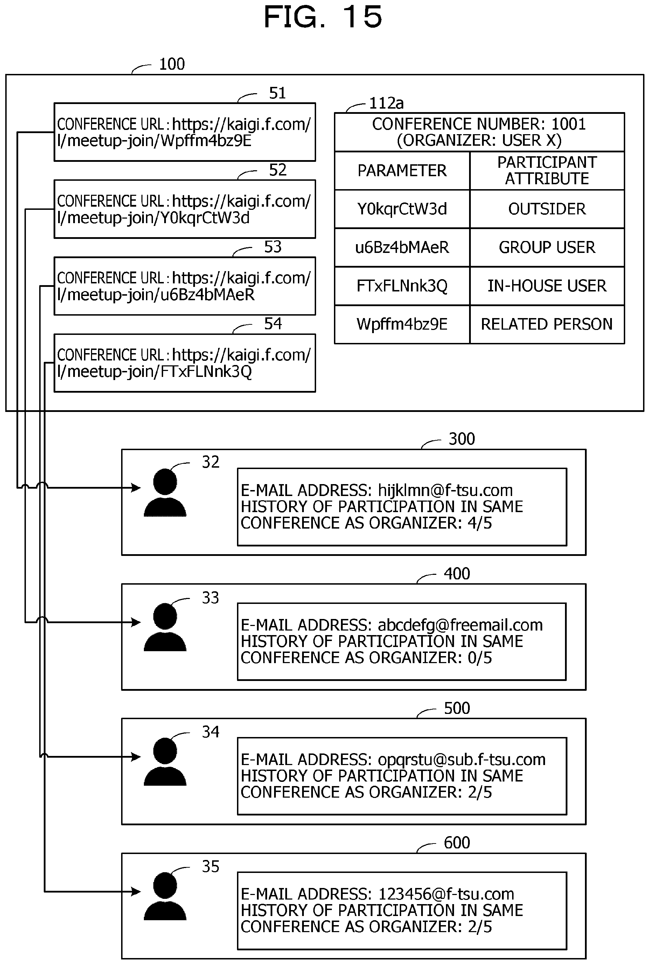

FIG. 15 is a diagram illustrating exemplary conference URL distribution. In the example of FIG. 15, conference URLs 51 to 54 are distributed to a plurality of participants 32 to 35, respectively, from the server 100. The conference URLs 51 to 54 are transmitted to the participant terminals 300, 400, 500, and 600 used by the participants 32 to 35, respectively, by e-mail, for example. Different parameters are assigned to the individual conference URLs 51 to 54, and the attributes of the participants of the transmission destinations are set in the parameter/attribute correspondence table 112a in association with the individual parameters.

For example, the e-mail address of the participant 33 is "abcdefg@freemail.com". It is assumed that the e-mail address of the organizer 31 is "aaaaaa@f-tsu.com" as illustrated in FIG. 9. In this case, it is determined that the participant 33 has a different domain name ("NO" in step S113 in FIG. 11) on the basis of the e-mail address, and the attribute is determined as an "outsider".

The e-mail address of the participant 34 is "opqrstu@sub.f-tsu.com". It is determined that the participant 34 has a different subdomain name ("YES" in step S115 in FIG. 11) on the basis of the e-mail address, and the attribute is determined as a "group user".

Since the e-mail addresses of the participants 32 and 35 match with that of the organizer up to the subdomain name, the attributes are determined on the basis of the conference history information 111. The attribute determination result is as illustrated in FIG. 12.

The individual participants 32 to 35 who have obtained the conference URLs 51 to 54 access the conference URLs 51 to 54 using the participant terminals 300, 400, 500, and 600 used by themselves at the participation date and time of the online conference. This allows the participants 32 to 35 to participate in the invited online conference.

At the time when the online conference is held, the server 100 holds the online conference. Then, the server 100 specifies the attributes of the participating participants according to the parameters assigned to the conference URLs when accessed from the participant terminals 300, 400, 500, and 600, and determines the viewing authority of the content for each of the participants. Then, the server 100 controls content sharing according to the determined viewing authority.

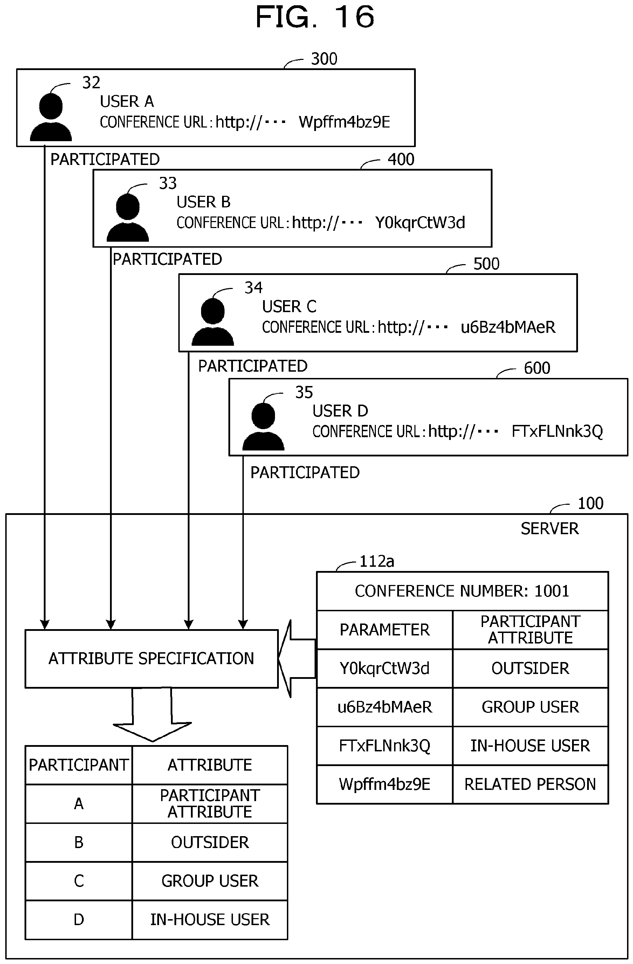

FIG. 16 is a diagram illustrating exemplary attribute specification at the time of conference participation. The individual participants 32 to 35 of the online conference access the conference URLs received in advance using the participant terminals 300, 400, 500, and 600 used by themselves, thereby participating in the online conference. The conference URL indicates a location within the server 100, and a request for accessing the conference URL is transmitted to the server 100.

When the conference screen control unit 130 of the server 100 obtains the request for accessing the conference URL, it allows the participant terminal of the transmission source to participate in the online conference. Then, the conference screen control unit 130 specifies an attribute of each participant on the basis of the parameter assigned to the accessed conference URL. For example, the conference screen control unit 130 refers to the parameter/attribute correspondence table 112a to obtain the attribute associated with the parameter assigned to the conference URL. Then, the conference screen control unit 130 specifies the obtained attribute as the attribute of the participant who has accessed the conference URL. In the example of FIG. 16, the attribute of the participant 32 (user A) is specified as a "related person", the attribute of the participant 33 (user B) is specified as an "outsider", the attribute of the participant 34 (user C) is specified as a "group user", and the attribute of the participant 35 (user D) is specified as an "in-house user".

When the conference screen control unit 130 has specified the attribute of each participant, it refers to the disclosure range management table 114 to determine the viewing authority for the participant to view the content.

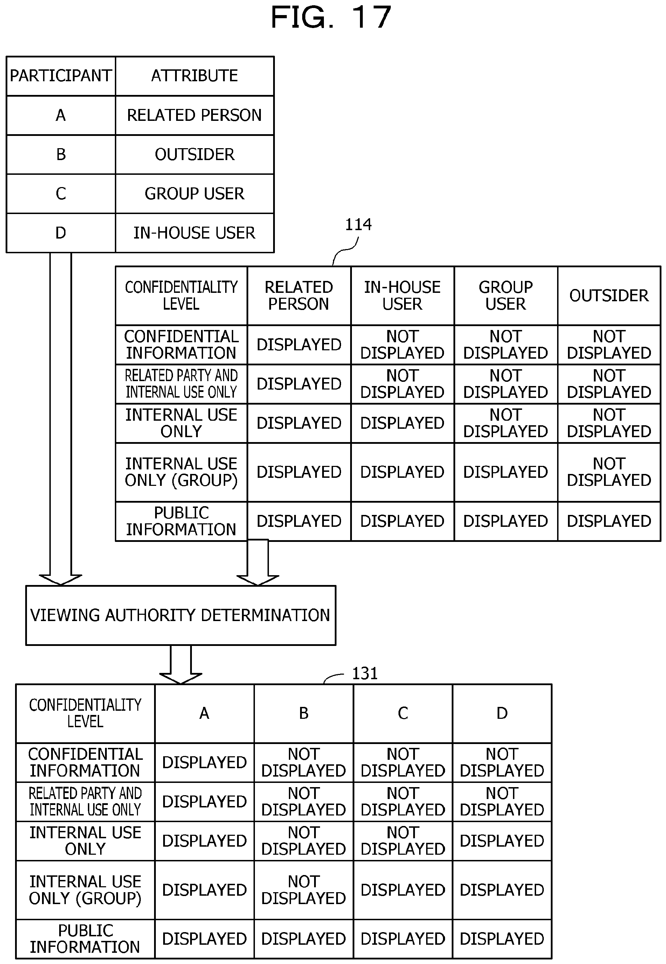

FIG. 17 is a diagram illustrating exemplary determination of the content viewing authority. For example, the conference screen control unit 130 generates a viewing authority table 131 on the basis of the viewing authority determination result. The viewing authority table 131 is saved in the memory 102 during the online conference.

In the viewing authority table 131, information regarding whether the content is to be displayed or not to be displayed for each participant (viewing authority) is set for each confidentiality level of the content. For example, since the attribute of the participant 32 with the username "A" is a "related person", the viewing authority of the "related person" in the disclosure range management table 114 is applied. For example, since the attribute of the participant 33 with the username "B" is an "outsider", the viewing authority of the "outsider" in the disclosure range management table 114 is applied. For example, since the attribute of the participant 34 with the username "C" is a "group user", the viewing authority of the "group user" in the disclosure range management table 114 is applied. For example, since the attribute of the participant 35 with the username "D" is an "in-house user", the viewing authority of the "in-house user" in the disclosure range management table 114 is applied.

During the online conference, the conference screen control unit 130 refers to the viewing authority table 131 to determine whether or not to display the content to be shared specified by the organizer 31 on the participant terminal of each participant.

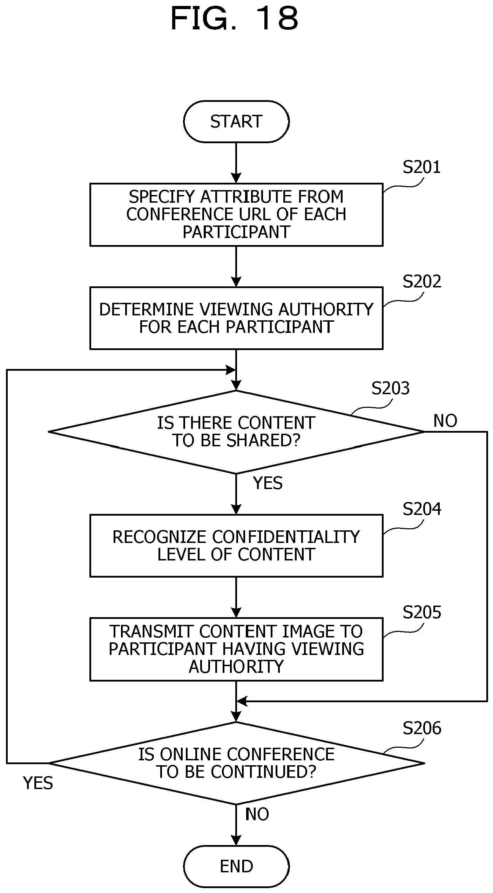

FIG. 18 is a flowchart illustrating an exemplary procedure of an online conference control process. Hereinafter, the process illustrated in FIG. 18 will be described in accordance with step numbers.

[Step S201] The conference screen control unit 130 of the server 100 specifies the attribute of the participant on the basis of the conference URL of each participant. For example, the conference screen control unit 130 searches the parameter/attribute correspondence table of the online conference to be held for the parameter set in the conference URL accessed from the participant terminal. The conference screen control unit 130 specifies the attribute associated with the parameter hit by the search as an attribute of the corresponding participant.

[Step S202] The conference screen control unit 130 determines the viewing authority for each participant on the basis of the attribute of each participant. Then, the conference screen control unit 130 generates the viewing authority table 131 in which the viewing authority determined for each participant is set.

[Step S203] The conference screen control unit 130 determines whether or not there is a content to be shared. For example, the conference screen control unit 130 obtains a request for sharing the content from the organizer terminal 200. The request for sharing the content includes a content image and a confidentiality level of the content. The content image is, for example, image data of the image displayed on the display screen (window) of the corresponding content on the organizer terminal 200. If there is a content to be shared, the conference screen control unit 130 advances the process to step S204. Furthermore, if there is no content to be shared, the conference screen control unit 130 advances the process to step S205.

[Step S204] The conference screen control unit 130 recognizes the confidentiality level of the content to be shared. The confidentiality level of the content to be shared is indicated in the sharing request.

[Step S205] The conference screen control unit 130 transmits the content image to the participant terminal of the participant having the viewing authority of the confidentiality level according to the confidentiality level of the content to be shared.

[Step S206] The conference screen control unit 130 determines whether or not to continue the online conference. For example, the conference screen control unit 130 determines that the online conference is to be terminated when a request for terminating the online conference is obtained from the organizer terminal 200. The conference screen control unit 130 determines that the online conference is to be continued while the request for terminating the online conference is not obtained. The conference screen control unit 130 advances the process to step S203 if the online conference is to be continued. Furthermore, the conference screen control unit 130 terminates the online conference control process if the online conference is to be terminated.

In this manner, during the online conference, the viewing authority of each participant is checked each time the request for sharing the content is received from the organizer terminal 200. Then, the content image is transmitted only to the participant terminal of the participant having the viewing authority.

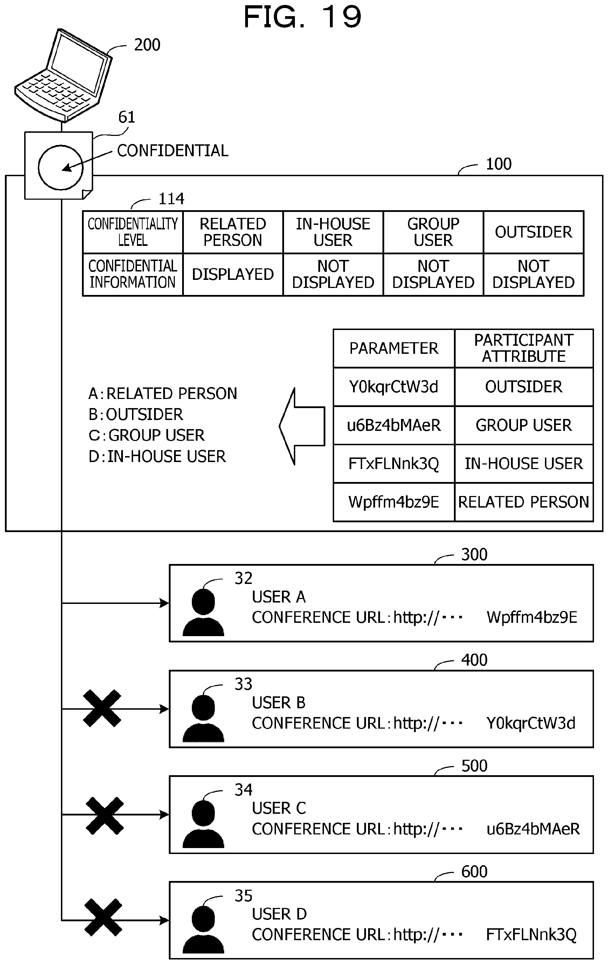

FIG. 19 is a diagram illustrating a first example of content image distribution of a content to be shared. In the example of FIG. 19, a content image 61 of the confidentiality level "confidential information" is transmitted from the organizer terminal 200 as a content to be shared. The server 100 transmits the content image 61 to the participant terminal of the participant having the viewing authority for the content of the confidentiality level "confidential information". Only the participant 32 with the attribute "related person" has the viewing authority for the confidentiality level "confidential information". Therefore, the content image 61 is transmitted only to the participant terminal 300 of the participant 32.

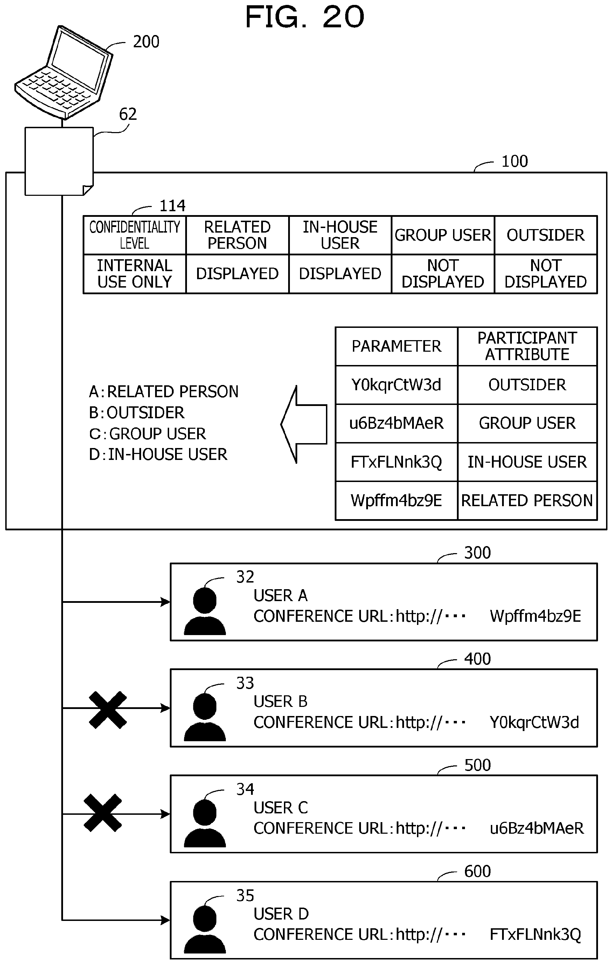

FIG. 20 is a diagram illustrating a second example of the content image distribution of the content to be shared. In the example of FIG. 20, a content image 62 of the confidentiality level "internal use only" is transmitted from the organizer terminal 200 as a content to be shared. The server 100 transmits the content image 62 to the participant terminal of the participant having the viewing authority for the content of the confidentiality level "internal use only". The participant 32 with the attribute "related person" and the participant 35 with the attribute "in-house user" have the viewing authority for the confidentiality level "internal use only". Therefore, the content image 62 is transmitted only to the participant terminal 300 of the participant 32 and the participant terminal 600 of the participant 35.

In this manner, the transmission destination of the content image of the content to be shared is determined according to the confidentiality level of the content and the viewing authority of the participant. On the participant terminal that has received the content image, the received content image is displayed on the screen for the online conference.

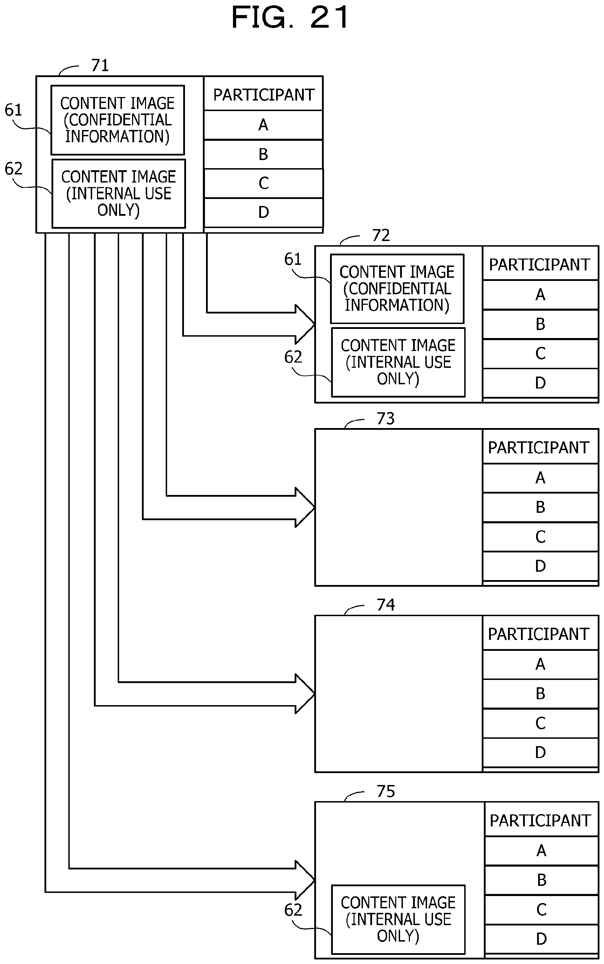

FIG. 21 is a diagram illustrating an exemplary display screen for the online conference. In the example of FIG. 21, the content image 61 of the content of the confidentiality level "confidential information" and the content image 62 of the content of the confidentiality level "internal use only" are displayed on an online conference screen (organizer screen 71) of the organizer terminal 200. At this time, it is assumed that the organizer 31 has input an instruction for sharing both of the two displayed contents to the organizer terminal 200.

In this case, the two content images 61 and 62 are displayed on an online conference screen (participant screen 72) of the participant terminal 300 of the participant 32 (user A) with the attribute "related person". None of the content images are displayed on an online conference screen (participant screen 73) of the participant terminal 400 of the participant 33 (user B) with the attribute "outsider". In a similar manner, none of the content images are displayed on an online conference screen (participant screen 74) of the participant terminal 500 of the participant 34 (user C) with the attribute "group user". On an online conference screen (participant screen 75) of the participant terminal 600 of the participant 35 (user D) with the attribute "in-house user", the content image 61 is not displayed while the content image 62 is displayed.

In this manner, different screens are displayed for the individual participants. This allows the organizer 31 of the online conference to disclose the content image of each content only to the participant having the viewing authority for the content. Since the viewing authority of the participant is automatically determined by the server 100, displaying on the participant terminal of the participant without the viewing authority for the content is suppressed. As a result, a leak of confidential information is suppressed.

Note that the organizer 31 of the online conference is enabled to optionally set a disclosure range of the content for each confidentiality level by changing information of the viewing authority set in the disclosure range management table 114 included in the server 100.

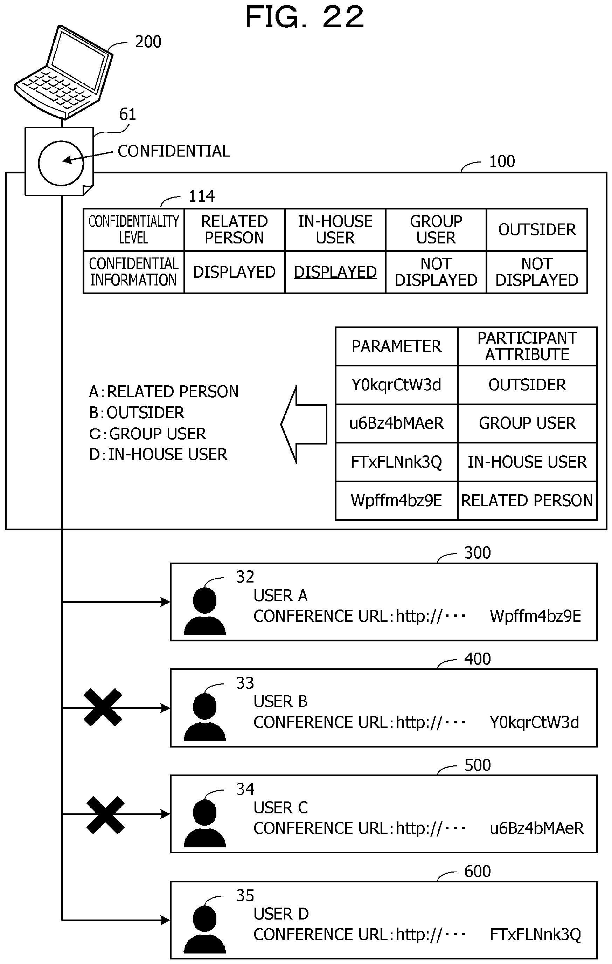

FIG. 22 is a diagram illustrating exemplary content image distribution of the content to be shared in a case where the disclosure range is changed. In the example of FIG. 22, in the disclosure range management table 114, the disclosure range of the confidentiality level "confidential information" is changed to the related person and the in-house user in place of only the related person. In this case, the content image 61 of the content of the confidentiality level "confidential information" is transmitted not only to the participant terminal 300 of the participant 32 with the attribute "related person" but also to the participant terminal 600 of the participant 35 with the attribute "in-house user".

In this manner, the disclosure range of the content according to the confidentiality level may be optionally set.

### [Other Embodiments]

While the online conference is held using the server 100 in the second embodiment, it is also possible to hold the online conference using the organizer terminal 200. Even in that case, it is possible to control a disclosure range at a time of sharing a content in a similar manner to the second embodiment.

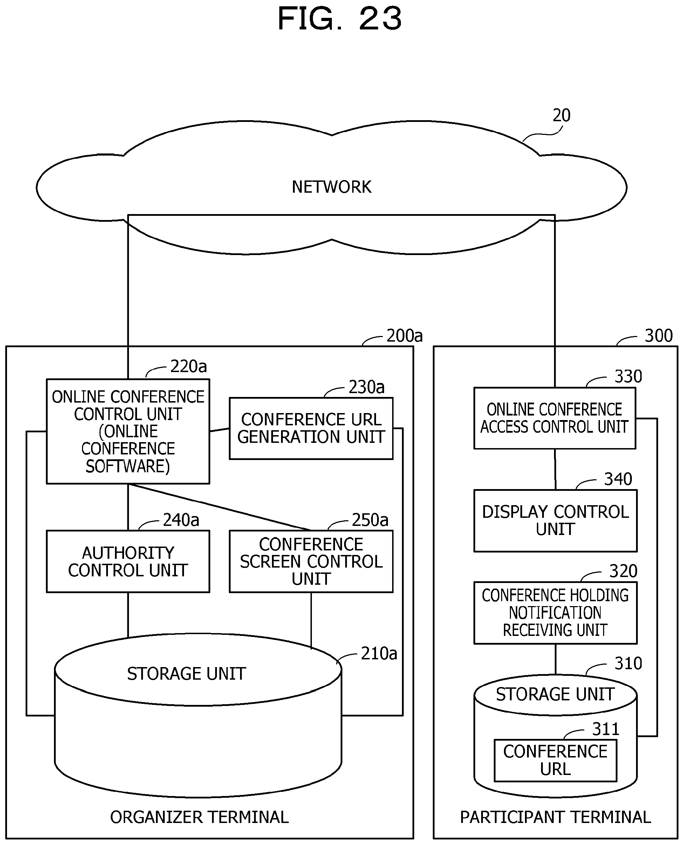

FIG. 23 is a diagram illustrating an exemplary configuration of a system that holds an online conference with an organizer terminal. For example, an organizer terminal 200a includes a storage unit 210a, an online conference control unit 220a, a conference URL generation unit 230a, an authority control unit 240a, and a conference screen control unit 250a.

The storage unit 210a stores information contained in the storage unit 110 of the server 100 and information contained in the storage unit 210 of the organizer terminal 200 in the second embodiment. The online conference control unit 220a distributes a conference URL for the online conference, receives a request for accessing the online conference in which the conference URL is specified, and the like. The online conference control unit 220a may be implemented by, for example, commonly used online conference software. The conference URL generation unit 230a has a function same as that of the conference URL generation unit 120 included in the server 100 according to the second embodiment. The authority control unit 240a has a function same as that of the authority control unit 240 included in the organizer terminal 200 according to the second embodiment. The conference screen control unit 250a has a function same as that of the conference screen control unit 130 included in the server 100 and a function same as that of the display control unit 250 included in the organizer terminal 200 according to the second embodiment.

Note that, in the example of FIG. 23, functions related to the online conference other than content sharing are implemented by the online conference control unit 220a. For example, when the online conference control unit 220a is implemented by online conference software, the functions illustrated in FIG. 23 may be implemented by additionally implementing the conference URL generation unit 230a, the authority control unit 240a, and the conference screen control unit 250a in the organizer terminal 200a.

In a case of newly developing the entire online conference software, a function for appropriate content sharing may be added to the online conference control unit 220a implemented by the online conference software.

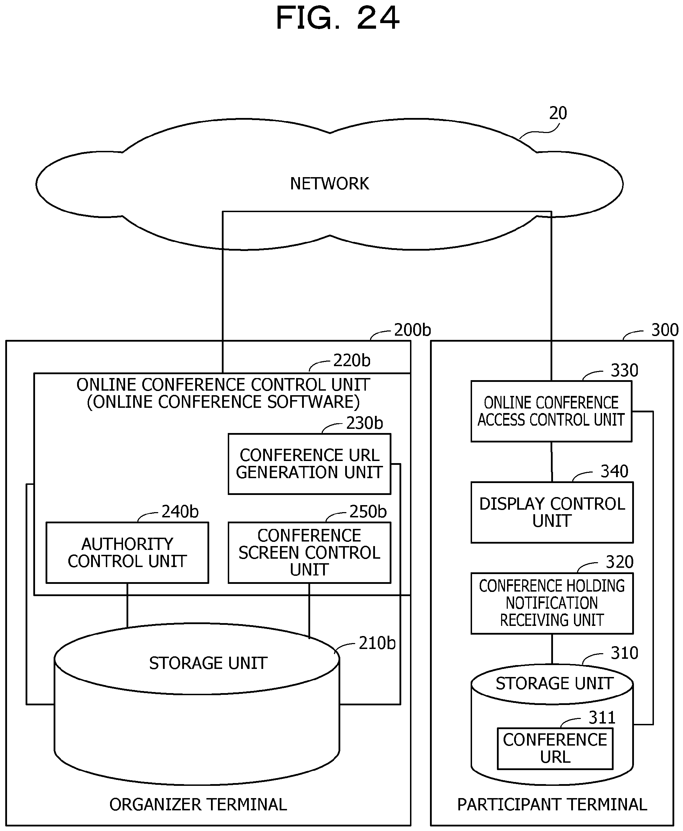

FIG. 24 is a diagram illustrating another exemplary configuration of the system that holds the online conference with the organizer terminal. For example, an organizer terminal 200b includes a storage unit 210b and an online conference control unit 220b. The storage unit 210b stores information similar to that in the storage unit 210a illustrated in FIG. 23.

The online conference control unit 220b has, in addition to the function of the online conference control unit 220a illustrated in FIG. 23, individual functions of a conference URL generation unit 230b, an authority control unit 240b, and a conference screen control unit 250b. The functions of the conference URL generation unit 230b, the authority control unit 240b, and the conference screen control unit 250b are the same as those of the individual elements illustrated in FIG. 23.

The embodiments have been exemplified above, and the configuration of each unit described in the embodiments may be replaced with another configuration having a similar function. Furthermore, any other components and steps may be added. Moreover, any two or more configurations (features) of the embodiments described above may be combined.

## Claims

1. An information processing program comprising instructions which, when executed by a computer, cause the computer to execute processing, the processing comprising:
transmitting, to a participant, access destination location information for participation in an online conference that includes a parameter of a value associated with an attribute of the participant of the online conference;
allowing the participant to participate in the online conference in response to an access in which the access destination location information is specified from a terminal used by the participant; and
determining whether or not to transmit information that indicates a content to the terminal on a basis of the attribute of the participant that corresponds to the value of the parameter included in the access destination location information used for the access at a time of participation in the online conference and a confidentiality level of the content to be shared in the online conference.

2. The information processing program according to claim 1, wherein
in the transmitting of the access destination location information, a unique character string is generated as the value of the parameter, and a parameter-attribute correspondence table that indicates a correspondence relationship between the value of the parameter and the attribute of the participant is stored in a storage unit, and
in the determining of whether or not to transmit the information, the attribute associated with the value of the parameter included in the received access destination location information in the parameter-attribute correspondence table is specified as the attribute of the participant.

3. The information processing program according to claim 1 or 2, the processing further comprising:
determining the attribute of the participant on a basis of information that indicates a relationship between the participant and an organizer of the online conference.

4. The information processing program according to claim 3, wherein
in the determining of the attribute of the participant, the attribute of the participant is determined on a basis of an e-mail address of the organizer and an e-mail address of the participant.

5. The information processing program according to claim 3 or 4, wherein
in the determining of the attribute of the participant, the attribute of the participant is determined on a basis of a ratio in which the participant has been present in other online conferences in which the organizer has participated.

6. The information processing program according to any one of claims 3 to 5, wherein
in the determining of the attribute of the participant, the attribute of the participant is determined on a basis of job classification of the organizer and job classification of the participant.

7. An information processing method implemented by a computer, the information processing method comprising:
transmitting, to a participant, access destination location information for participation in an online conference that includes a parameter of a value associated with an attribute of the participant of the online conference;
allowing the participant to participate in the online conference in response to an access in which the access destination location information is specified from a terminal used by the participant; and
determining whether or not to transmit information that indicates a content to the terminal on a basis of the attribute of the participant that corresponds to the value of the parameter included in the access destination location information used for the access at a time of participation in the online conference and a confidentiality level of the content to be shared in the online conference.

8. An information processing apparatus comprising:
a processor configured to perform processing, the processing including:
transmitting, to a participant, access destination location information for participation in an online conference that includes a parameter of a value associated with an attribute of the participant of the online conference;
allowing the participant to participate in the online conference in response to an access in which the access destination location information is specified from a terminal used by the participant; and
determining whether or not to transmit information that indicates a content to the terminal on a basis of the attribute of the participant that corresponds to the value of the parameter included in the access destination location information used for the access at a time of participation in the online conference and a confidentiality level of the content to be shared in the online conference.
